(19) Europäisches Patentamt
European Patent Office
Office européen des brevets

(11) Veröffentlichungsnummer: **0 224 217**
**B1**

(12) # EUROPÄISCHE PATENTSCHRIFT

(45) Veröffentlichungstag der Patentschrift: **21.06.89**

(51) Int. Cl.⁴: **C07F 9/65**, A01N 57/08

(21) Anmeldenummer: **86116184.2**

(22) Anmeldetag: **22.11.86**

(54) **Phosphorsäurederivate, Verfahren zu ihrer Herstellung und ihre Verwendung zur Bekämpfung von Schädlingen.**

(30) Priorität: **29.11.85 DE 3542173**

(43) Veröffentlichungstag der Anmeldung: **03.06.87 Patentblatt 87/23**

(45) Bekanntmachung des Hinweises auf die Patenterteilung: **21.06.89 Patentblatt 89/25**

(84) Benannte Vertragsstaaten: **AT BE CH DE FR GB LI NL**

(56) Entgegenhaltungen:
**DE-A- 2 425 237**
**US-A- 4 486 421**
**US-A- 4 489 068**

(73) Patentinhaber: **BASF Aktiengesellschaft, Carl-Bosch-Strasse 38, D-6700 Ludwigshafen(DE)**

(72) Erfinder: **Börstinghaus, Rainer, Dr., Roentgenstrasse 38, D-6900 Heidelberg(DE)**
Erfinder: **Wild, Jochen, Dr., An der Morlach 7, D-6705 Deidesheim(DE)**
Erfinder: **Adolphi, Heinrich, Dr., Kalmitweg 11, D-6703 Limburgerhof(DE)**
Erfinder: **Hofmeister, Peter, Dr., Bernard-Humblot-Strasse 12, D-6730 Neustadt(DE)**

**EP 0 224 217 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Phosphorsäurederivate, Verfahren zu ihrer Herstellung, Schädlingsbekämpfungsmittel, die diese Phosphorsäurederivate als Wirkstoff enthalten, sowie ein Verfahren zur Bekämpfung von Schädlingen mit diesen Wirkstoffen.

Heterocyclische Phosphorsäurederivate sind schon lange bekannt (z.B. das bekannte Mittel Diazinon). In neuerer Zeit sind aus der DE-A 27 03 310 und der DE-A 30 03 377 entsprechende Produkte bekannt. Sie eignen sich zur Bekämpfung von Insekten und Spinnentieren. Ihre Wirkung ist jedoch speziell bei geringer Konzentration nicht immer ganz zufriedenstellend.

Es wurde gefunden, daß Phosphorsäurederivate der Formel I

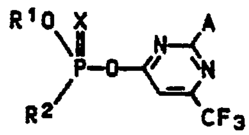

(I),

in der

$R^1$ Methyl oder Ethyl,

$R^2$ Methyl, Ethyl, Propyl, Phenyl, eine Alkoxy- oder Alkylthiogruppe mit bis zu 4 Kohlenstoffatomen,

X Sauerstoff oder Schwefel und

A Methyl, Ethyl oder Propyl bedeuten,

insektizid, akarizid und nematizid sehr gut wirksam und bekannten Wirkstoffen ähnlicher Struktur bzw. gleicher Wirkungsrichtung überlegen sind. Sie stellen somit eine wichtige Bereicherung der Technik dar.

Die Phosphorsäurederivate der Formel I können durch Umsetzung entsprechender 4-Hydroxy-6-trifluormethylpyrimidine mit entsprechenden (Thiono)(Thiol)Phosphor(Phosphon)säureester-halogeniden erhalten werden:

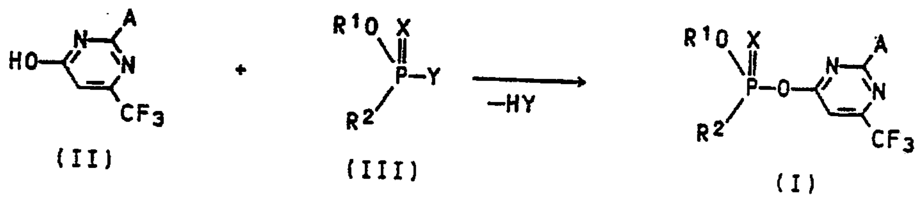


(II) (III) (I)

Y steht für Halogen und bedeutet aus wirtschaftlichen Gründen vorzugsweise ein Chloratom.

Die zur Herstellung der Verbindungen I benötigten 4-Hydroxy-6-trifluormethylpyrimidine sind z.B. aus J. Chem. Soc. 1959, 3278 ff. bzw. Gazetta 95, 1293 ff. (1965) bekannt bzw. lassen sich mit den dort beschriebenen Methoden herstellen. Die außerdem benötigten (Thiono)(Thiol)Phosphor(Phosphon)-säureester-halogenide III sind aus Houben-Weyl, Methoden der organischen Chemie, Band XII/2, S. 274 ff, Georg-Thieme-Verlag, Stuttgart, 1964 bekannt und lassen sich auf den dort beschriebenen Synthesewegen herstellen.

Die Umsetzung wird zweckmäßigerweise in einem Lösungs- oder Verdünnungsmittel ausgeführt. Hierzu sind beispielsweise geeignet: aliphatische und aromatische, gegebenenfalls chlorierte Kohlenwasserstoffe, wie Petrolether, Benzol, Toluol, Xylol, Benzin, Dichlormethan, Chloroform, Tetrachlormethan, 1,2-Dichlormethan, Chlorbenzol, Ether wie Diethyl-und Di-n-butylether, Methyl-tert.-butylether, Tetrahydrofuran, Dioxan; Ketone, beispielsweise Aceton, Methylethylketon, Methylisopropylketon; ferner Nitrile, wie Acetonitril und Propionitril; aprotische, dipolare Lösungsmittel wie Dimethylformanid und Dimethylsulfoxid. Auch Gemische dieser Stoffe können als Lösungs- oder Verdünnungsmittel verwendet werden.

Als Säurebindemittel (Säureacceptoren) eignen sich die bei der Phosphorylierung von heterocyclischen Hydroxyverbindungen üblichen basischen Mittel. Besonders geeignet sind Alkalimetallcarbonate oder -alkoholate, wie Natrium- und Kaliumcarbonat, -methylat und -ethylat, ferner aliphatische, aromatische und heterocyclische Amine, z.B. Triethylamin, Dimethylamin, Piperidin, Dimethylanilin, Dimethylbenzylamin und Pyridin. In einigen Fällen ist die Verwendung von Alkyllithiumverbindungen, z.B. n-Butyllithium oder Alkalimetallhydriden, z.B. Natriumhydrid vorteilhaft.

Anstelle des Zusatzes eines Säureacceptors kann man auch vor der Umsetzung die Salze der 4-Hydroxy-6-trifluormethylpyrimidine etwa die Alkalimetall-, Erdalkalimetall- oder Ammoniumsalze herstellen und diese umsetzen.

Üblicherweise setzt man die Ausgangsstoffe in stöchiometrischem Verhältnis ein. Ein Überschuß des einen oder anderen kann in Einzelfällen aber durchaus vorteilhaft sein.

Die Umsetzung verläuft gewöhnlich oberhalb von Raumtemperatur mit ausreichender Geschwindigkeit. 120°C müssen i.a. nicht überschritten werden. Da sie in einigen Fällen unter Wärmeentwicklung verläuft, kann es von Vorteil sein, eine Kühlmöglichkeit vorzusehen.

Das Reaktionsgemisch wird in üblicher Weise aufgearbeitet, z.B. durch Versetzen mit Wasser, Trennen der Phasen und Destillation und/oder Säulenchromatographie.

Die neuen Verbindungen der Formel I fallen teilweise in Form farbloser oder schwach bräunlich gefärbter Öle an, die sich durch längeres Erwärmen unter vermindertem Druck auf mäßig erhöhte Temperatur ("Andestillieren") von den letzten flüchtigen Anteilen befreien und auf diese Weise reinigen lassen. Erhält man diee Verbindungen der Formel I in kristalliner Form, so kann ihre Reinigung durch Umkristallisation erfolgen.

Zur Charakterisierung der neuen Phosphorsäurederivate der Formel I dienen im folgenden IR-Spektren mit typischen Absorptionsmaxima aus dem sog. "fingerprint"-Bereich zwischen 1 500 $cm^{-1}$ und 900 $cm^{-1}$.

Die folgenden Beispiele erläutern die Herstellung der Phosphorsäurederivate der Formel I:

Beispiel 1

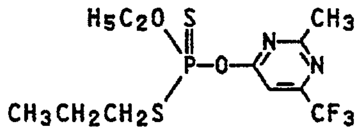

19,68 g 2-Methyl-4-hydroxy-6-trifluormethylpyrimidin und 13,11 g Dithiophosphorsäure-O-ethyl-S-n-propyl-diesterchlorid werden in 60 ml Acetonitril vorgelegt und unter Rühren portionsweise mit 8,28 g pulverisiertem Kaliumcarbonat versetzt. Die Reaktionsmischung wird 6 Stunden auf 60°C erwärmt, dann wird bei Raumtemperatur von unlöslichen Bestandteilen abgesaugt und das Filtrat im Vakuum eingeengt. Der Rückstand wird in Methyl-tert.butylether aufgenommen, je dreimal mit 5 %iger Natronlauge bzw. Wasser gewaschen, über Natriumsulfat getrocknet und vom Lösungsmittel befreit. Der Rückstand (16,7 g) läßt sich säulenchromatographisch über Kieselgel mit Hexan/Methyl-tert.butylether (2 : 1) als Laufmittel reinigen. Man erhält 13,0 g O-Ethyl-S-n-propyl-O-(2-methyl-6-trifluormethyl-pyrimidin-6-yl)dithiophosphat als hellgelbes Öl. Ausbeute: 60 % der rechnerisch möglichen Menge.

$C_{11}H_{16}F_3N_2O_2PS_2$ (360)
ber.: C 36,7 H 4,5 N 7,8
gef.: C 36,8 H 4,6 N 7,5

Infrarotabsorptionen ($cm^{-1}$): 1383, 1156, 1020, 903, 678.

Beispiel 2

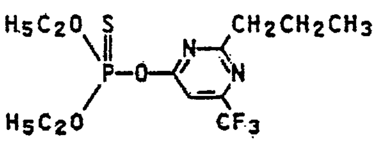

Zu einer Mischung aus 12,4 g 2-n-Propyl-4-hydroxy-6-tifluormethylpyrimidin, 60 ml Acetonitril und 8,28 g Kaliumcarbonat fügt man tropfenweise 11,31 g Thiophosphorsäure-O,O-diethylesterchlorid. Die Mischung wird noch 6 Stunden bei 50°C gerührt und nach dem Abkühlen filtriert. Das Filtrat wird im Vakuum eingeeingt, der Rückstand in Methyl-tert.butylether aufgenommen, je dreimal mit 5 %iger Natronlauge bzw. Wasser gewaschen, über Natriumsulfat getrocknet und erneut vom Lösungsmittel befreit. Nach dem Andestillieren bei 0,01 mbar und 50°C verbleiben 18,7 g O,O-Diethyl-O-(2-n-propyl-6-trifluormethylpyrimidin-6-yl)phosphorthioat als nahezu farbloses viskoses Öl. Ausbeute: 87 % der rechnerisch möglichen Menge.

Infrarotabsorptionen ($cm^{-1}$): 1394, 1185, 1157, 1025, 830.

Die in der nachstehenden Tabelle aufgeführten Verbindungen wurden ebenfalls auf dem im Beispiel 1 beschriebenen Weg erhalten, soweit sie durch ihre Absorptionsspektren identifiziert sind; andere Verbindungen, die der Formel (I) entsprechen, können auf die gleiche Weise unter entsprechender Abwandlung der Vorschriften nach der jeweils benötigten Menge und (wegen der besten Reaktionsbedingungen) gegebenenfalls nach einem Vorversuch erhalten werden.

Tabelle

| Bsp. Nr. | $R^1$ | $R^2$ | A | X | Infrarotabsorptionen ($cm^{-1}$) |
|---|---|---|---|---|---|
| 3 | $C_2H_5$ | $OC_2H_5$ | $CH_3$ | S | 1397, 1157, 1028, 982, 906, 829 |
| 4 | $C_2H_5$ | $OC_2H_5$ | $CH_3$ | O | 1288, 1187, 1155, 1038, 990, 910 |
| 5 | $CH_3$ | $OCH_3$ | $CH_3$ | S | 1395, 1185, 1155, 1041, 907, 849 |
| 6 | $CH_3$ | $OCH_3$ | $CH_3$ | O | |
| 7 | $C_2H_5$ | $C_2H_5$ | $CH_3$ | S | 1390, 1184, 1154, 1026, 901 |
| 8 | $C_2H_5$ | $C_6H_5$ | $CH_3$ | S | 1382, 1143, 1056, 1024, 906 |
| 9 | $CH_3$ | $C_2H_5$ | $CH_3$ | S | 1394, 1185, 1155, 1061, 902 |
| 10 | $C_2H_5$ | S-n-$C_3H_7$ | $CH_3$ | O | |
| 11 | $C_2H_5$ | S-sec.-$C_4H_9$ | $CH_3$ | S | |
| 12 | $C_2H_5$ | $OC_2H_5$ | $C_2H_5$ | S | 1393, 1186, 1157, 1024, 964 |
| 13 | $C_2H_5$ | $OC_2H_5$ | $C_2H_5$ | O | 1395, 1304, 1186, 1154, 1029, 967 |
| 14 | $CH_3$ | $OCH_3$ | $C_2H_5$ | S | 1393, 1185, 1041, 966, 887 |
| 15 | $C_2H_5$ | $C_2H_5$ | $C_2H_5$ | S | 1393, 1185, 1156, 961 |
| 16 | $C_2H_5$ | $CH_3$ | $C_2H_5$ | S | |
| 17 | $C_2H_5$ | S-n-$C_3H_7$ | $C_2H_5$ | S | 1386, 1185, 1157, 1018, 960 |
| 18 | $C_2H_5$ | S-n-$C_3H_7$ | $C_2H_5$ | O | |
| 19 | $C_2H_5$ | S-sec.-$C_4H_9$ | $C_2H_5$ | S | |
| 20 | $C_2H_5$ | $OC_2H_5$ | n-$C_3H_7$ | O | 1395, 1280, 1185, 1155, 1032, 922 |
| 21 | $CH_3$ | $OCH_3$ | n-$C_3H_7$ | S | 1393, 1184, 1156, 1042, 1014, 919 |
| 22 | $C_2H_5$ | $C_2H_5$ | n-$C_3H_7$ | S | 1393, 1184, 1156, 1010 |
| 23 | $C_2H_5$ | $CH_3$ | n-$C_3H_7$ | S | |
| 24 | $C_2H_5$ | S-n-$C_3H_7$ | n-$C_3H_7$ | S | 1386, 1184, 1156, 1026, 1009, 915 |
| 25 | $C_2H_5$ | S-n-$C_3H_7$ | n-$C_3H_7$ | O | |
| 26 | $C_2H_5$ | S-sec.-$C_4H_9$ | n-$C_3H_7$ | S | |
| 27 | $C_2H_5$ | $OC_2H_5$ | i-$C_3H_7$ | S | 1393, 1251, 1187, 1187, 1157, 1027, 999, 913 |
| 28 | $C_2H_5$ | $OC_2H_5$ | i-$C_3H_7$ | O | |
| 29 | $CH_3$ | $OCH_3$ | i-$C_3H_7$ | S | 1193, 1187, 1156, 1042, 999, 914 |
| 30 | $C_2H_5$ | $C_2H_5$ | i-C3H7 | S | 1392, 1186, 1156, 1047, 990, 911 |
| 31 | $C_2H_5$ | $CH_3$ | i-$C_3H_7$ | S | |
| 32 | $C_2H_5$ | S-n-$C_3H_7$ | i-$C_3H_7$ | S | 1385, 1186, 1156, 994, 911 |
| 33 | $C_2H_5$ | S-n-$C_3H_7$ | i-$C_3H_7$ | O | |
| 34 | $C_2H_5$ | S-sec.-$C_4H_9$ | i-$C_3H_7$ | S | |

Die Phosphorsäureverbindungen der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Anwendungsbeispiele

Als Vergleichsmittel wurde die aus der DE-OS 3 420 166 bekannte Verbindung

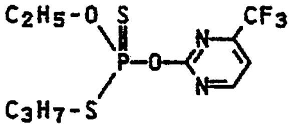

herangezogen.

Kontaktwirkung auf Schaben (Blatta orientalis)

Der Boden eines 1 l-Weckglases wird mit der acetonischen Lösung des Wirkstoffes behandelt. Nach Verdunsten des Lösungsmittels setzt man je Glas 5 adulte Schaben. Die Mortalität wird nach 48 Stunden bestimmt.

Ergebnis

| | | |
|---|---|---|
| Beispiel 1 | 0,4 mg | 100% Mort. |
| Beispiel 3 | 0,4 mg | 100% Mort. |
| Beispiel 4 | 0,1 mg | 80% Mort. |
| Beispiel 9 | 0,4 mg | 100% Mort. |
| Beispiel 13 | 0,4 mg | 100% Mort. |
| Beispiel 14 | 0,4 mg | 100% Mort. |
| Beispiel 20 | 0,4 mg | 100% Mort. |
| Beispiel 28 | 0,4 mg | 100% Mort. |
| Beispiel 29 | 0,4 mg | 100% Mort. |
| Beispiel 32 | 0,4 mg | 100% Mort. |

Kontaktwirkung auf Stubenfliegen (Musca domestica) Dauerkontakt

Beide Teile einer Petrischale von 10 cm Durchmesser werden mit insgesamt 2 ml der acetonischen Wirkstofflösung ausgekleidet. Nach Verdunsten des Lösungsmittels (ca. 30 Minuten) bringt je 10 Fliegen in die Schalen. Die Mortalität wird nach 4 Stunden festgestellt.

Ergebnis

| | | |
|---|---|---|
| Beispiel 4 | 0,002 mg | 100% Mort. |
| | 0,004 mg | 80% Mort. |
| Beispiel 12 | 0,02 mg | 100% Mort. |
| | 0,01 mg | 80% Mort. |
| Beispiel 13 | 0,002 mg | 100% Mort. |
| | 0,004 mg | 80% Mort. |
| Beispiel 20 | 0,01 mg | 100% Mort. |
| Beispiel 22 | 0,01 mg | 100% Mort. |
| Beispiel 25 | 0,01 mg | 100% Mort. |
| Beispiel 28 | 0,02 mg | 100% Mort. |
| Vergleichsmittel | 0,2 mg | 100% Mort. |

Kontaktwirkung auf Baumwollwanze (Dysdercus intermedius)

Petrischalen von 10 cm Durchmesser werden mit 1 ml der acetonischen Wirkstofflösung ausgekleidet. Nach Verdunsten des Lösungsmittels besetzt man die Schalen mit je 20 Larven des vorletzten Stadiums und registriert die Wirkung nach 24 Stunden.

Ergebnis

| | | |
|---|---|---|
| Beispiel 2 | 0,1 mg | 100% Mort. |
| Beispiel 4 | 0,02 mg | 100% Mort. |
| Beispiel 13 | 0,01 mg | 100% Mort. |
| Beispiel 14 | 0,2 mg | 100% Mort. |
| Beispiel 15 | 0,2 mg | 100% Mort. |
| Beispiel 20 | 0,04 mg | 100% Mort. |
| Beispiel 22 | 0,1 mg | 100% Mort. |
| Beispiel 29 | 0,2 mg | 100% Mort. |
| Beispiel 32 | 0,02 mg | 100% Mort. |
| Vergleichsmittel | 0,2 mg | <60% Mort. |

Kontaktwirkung auf Blattläuse (Aphis fabae) Spritzversuch

Getopfte Bohnenpflanzen (Vicia faba) mit starken Blattlauskolonien werden in der Spritzkammer mit den wäßrigen Wirkstoffaufbereitungen tropfnaß gespritzt.

Die Auswertung erfolgt nach 24 Stunden.

Ergebnis

| | | |
|---|---|---|
| Beispiel 13 | 0,002 mg | 100% Mort. |
| | 0,001 mg | ca. 80% Mort. |
| Beispiel 20 | 0,02 mg | 100% Mort. |
| | 0,01 mg | ca. 80% Mort. |
| Beispiel 28 | 0,004 mg | 100% Mort. |
| | 0,002 mg | ca. 80% Mort. |
| Beispiel 32 | 0,002 mg | ca. 80% Mort. |
| Vergleichsmittel | 0,04 mg | 100% Mort. |
| | 0,02 mg | <70% Mort. |

Kontaktwirkung auf Kornkäfer

Aufgerauhte Glasplatten von 8 × 8 cm Kantenlänge werden mit der acetonischen Wirkstofflösung behandelt.

Nach Verdunsten des Lösungsmittels belegt man die Platten mit 100 Kornkäfer und deckt mit einem Uhrglas (Ø 6 cm) ab. Nach 4 Stunden werden die Käfer in unbehandelte Gefäße überführt. Die Mortalitätsrate wird nach 24 Stunden ermittelt. Dabei wird festgestellt, wieviele Käfer in der Lage waren, nach diesem Zeitpunkt innerhalb von 60 Minuten ein unbehandeltes Pappschälchen (Ø 40 mm, Höhe 10 mm) zu verlassen.

Ergebnis

| | | |
|---|---|---|
| Beispiel 4 | 0,1 mg | 100% Mort. |
| Beispiel 13 | 0,1 mg | 100% Mort. |
| Beispiel 20 | 0,1 mg | 100% Mort. |
| Vergleichssubstanz | 1 mg | <50% Mort. |

Kontaktwirkung auf Reismehlkäfer (Tribolium castaneum)

Die Prüfung erfolgt auf behandelten Rundfiltern von 7 cm Durchmesser. Je 50 Käfer werden dem Wirkstoff innerhalb eines Glasringes von 4,5 cm Durchmesser 24 Stunden exponiert, darauf bestimmt man die Mortalitätsrate.

Ergebnis

| | | |
|---|---|---|
| Beispiel 2 | 0,1 mg | 100% Mort. |
| Beispiel 3 | 0,1 mg | 100% Mort. |
| Beispiel 4 | 0,1 mg | 100% Mort. |
| Beispiel 7 | 0,1 mg | 100% Mort. |
| Beispiel 12 | 0,04 mg | 100% Mort. |
| Beispiel 14 | 0,1 mg | 100% Mort. |
| Beispiel 15 | 0,1 mg | 100% Mort. |
| Beispiel 21 | 0,1 mg | 100% Mort. |
| Beispiel 22 | 0,02 mg | 80% Mort. |
| Beispiel 25 | 0,1 mg | 100% Mort. |
| Beispiel 29 | 0,1 mg | 100% Mort. |
| Beispiel 30 | 0,1 mg | 100% Mort. |
| Vergleichsmittel | 0,2 mg | 100% Mort. |
| | 0,1 mg | <60% Mort. |

Plutella maculipennis; Kohlschaben-Raupen; Fraß- und Kontaktwirkung

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

Ergebnis

| | | |
|---|---|---|
| Beispiel 1 | 0,04 mg | 100% Mort. |
| Beispiel 2 | 0,004 mg | ca. 80% Mort. |
| Beispiel 3 | 0,01 mg | ca. 80% Mort. |
| Beispiel 4 | 0,02 mg | ca. 80% Mort. |
| Beispiel 7 | 0,01 mg | 100% Mort. |
| Beispiel 9 | 0,01 mg | ca. 80% Mort. |
| Beispiel 12 | 0,02 mg | 100% Mort. |
| Beispiel 14 | 0,02 mg | ca. 80% Mort. |
| Beispiel 15 | 0,01 mg | ca. 80% Mort. |
| Beispiel 17 | 0,02 mg | ca. 80% Mort. |
| Beispiel 20 | 0,02 mg | ca. 80% Mort. |
| Beispiel 21 | 0,02 mg | ca. 80% Mort. |
| Beispiel 22 | 0,01 mg | ca. 80% Mort. |
| Beispiel 24 | 0,02 mg | ca. 80% Mort. |
| Beispiel 27 | 0,002 mg | ca. 80% Mort. |
| Beispiel 28 | 0,01 mg | ca. 80% Mort. |
| Beispiel 29 | 0,004 mg | ca. 80% Mort. |
| Beispiel 32 | 0,01 mg | ca. 80% Mort. |

Kontaktwirkung auf Stubenfliegen (Musca domestica) Applikationstest

4-Tage alte Imagines erhalten in leichter $CO_2$-Narkose 1 µl der acetonischen Wirkstofflösung auf das ventrale Abdomen appliziert. Hierzu wird eine Mikrometerspritze verwendet.

Je 20 Versuchstiere mit gleicher Behandlung bringt man in einen Cellophanbeutel (ca. 500 ml). Nach 4 Stunden zählt man die Tiere in Rückenlage aus und ermittelt graphisch die LD 50.

Ergebnis

| | | |
|---|---|---|
| Beispiel 4 | 0,052 | µg/Fliege |
| Beispiel 12 | 0,041 | µg/Fliege |
| Beispiel 13 | 0,061 | µg/Fliege |
| Beispiel 15 | 0,088 | µg/Fliege |
| Beispiel 20 | 0,043 | µg/Fliege |
| Beispiel 22 | 0,054 | µg/Fliege |
| Beispiel 27 | 0,047 | µg/Fliege |
| Beispiel 28 | 0,088 | µg/Fliege |
| Beispiel 32 | 0,088 | µg/Fliege |

**Patentansprüche**

1. Phosphorsäureverbindung der Formel I

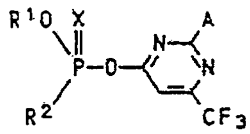

(I),

in der
$R^1$ Methyl oder Ethyl,
$R^2$ Methyl, Ethyl, Propyl, Phenyl, eine Alkoxy- oder Alkylthiogruppe mit bis zu 4 Kohlenstoffatomen,
X Sauerstoff oder Schwefel und
A Methyl, Ethyl oder Propyl bedeuten.

2. Verfahren zur Herstellung von Phosphorsäurederivaten der Formel I gemäß Anspruch 1, dadurch gekennzeichnet, daß man ein entsprechendes 4-Hydroxy-6-trifluormethylpyrimidin (II)

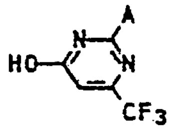

(II),

vorzugsweise in Gegenwart eines Säureaccedptors oder Alkalimetall-, Erdalkalimetall- oder gegebenenfalls substituierte Ammoniumsalze dieser 4-Hydroxy-6-trifluoromethylpyrimidine mit einem entsprechenden (Thio) (Thiol)Phosphor(Phosphon)säureester(amid)-halogenid (III)

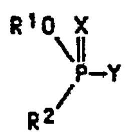

(III),

in dem
Y für Halogen steht, gegebenenfalls in Gegenwart eines Lösungs- oder Verdünnungsmittels bei Temperaturen zwischen 0 und 120°C umsetzt.

3. Schädlingsbekämpfungsmittel, enthaltend ein Phosphorsäurederivat gemäß Anspruch 1.

4. Schädlingsbekämpfungsmittel, enthaltend einen festen oder flüssigen Trägerstoff und mindestens ein Phosphorsäurederivat der Formel I gemäß Anspruch 1.

5. Verwendung von Phosphorsäurederivaten der Formel I gemäß Anspruch 1 zur Bekämpfung von Schädlingen.

6. Verfahren zur Bekämpfung von Schädlingen, dadurch gekennzeichnet, daß man eine wirksame Menge des Phosphorsäurederivats gemäß Anspruch 1 auf Schädlinge bzw. deren Lebensraum einwirken läßt.

**Revendications**

1. Dérivé d'acide phosphorique de formule I

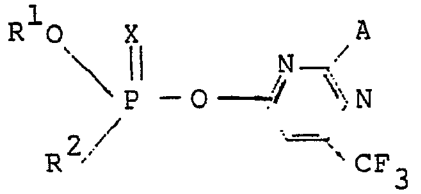

(I)

dans laquelle
$R^1$ représente méthyle ou éthyle
$R^2$, méthyle, éthyle, propyle, phényle, un groupe alcoxy- ou alkyltio ayant jusqu'à 4 atomes de carbone
X, oxygène ou soufre et
A, méthyle, éthyle ou propyle.

2. Procédé de préparation de dérivés d'acide phosphorique de formule I selon la revendication 1, caractérisé par le fait que l'on fait réagir, à des températures comprises entre 0 et 120°C, éventuellement en présence d'un solvant ou diluant, une 4-hydroxy-6-trifluorométhylpyrimidine (II)

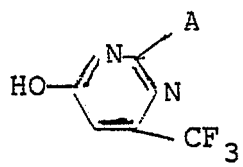

(II),

éventuellement en présence d'un accepteur d'acide ou de sels de métal alcalin ou de métal alcalino-terreux ou d'ammonium, éventuellement substitués, de cette 4-hydroxy-6-trifluorométhylpyrimidine, avec un halogènure d'ester d'acide (thio) (thiol) phosphor (phosphonique)

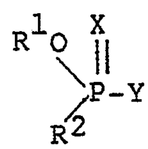

(III)

dans lequel
Y est mis par halogène.

3. Pesticide contenant un dérivé d'acide phosphorique, selon la revendication 1.

4. Pesticide contenant un support solide ou liquide et au moins un dérivé d'acide phosphorique de formule I selon la revendication 1.

5. Utilisation de dérivés d'acide phosphorique de formule I selon la revendication 1 pour lutter contre les insectes nuisibles.

6. Procédé de lutte contre les insectes nuisibles, caractérisé par le fait que l'on fait agir une quantité efficace de dérivé d'acide phosphorique selon la revendication 1 sur des insectes nuisibles ou leur biotope.

**Claims**

1. A phosphoric acid compound of the formula I

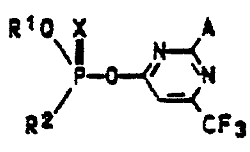

(I)

where $R^1$ is methyl or ethyl, $R^2$ is methyl, ethyl, propyl, phenyl or an alkoxy or alkylthio group of not more than 4 carbon atoms, X is oxygen or sulfur and A is methyl, ethyl or propyl.

2. A process for the preparation of a phosphoric acid derivative of the formula I as claimed in claim 1, wherein an appropriate 4-hydroxy-6-trifluoromethylpyrimidine (II)

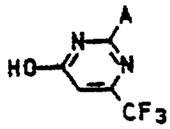

(II)

preferably in the presence of an acid acceptor, or an alkali metal, alkaline earth metal or unsubstituted or substituted ammonium salt of this 4-hydroxy-6-trifluoromethylpyrimidine is reacted with an appropriate (thio) (thiol) phosphoric (phosphonic) ester halide (III)

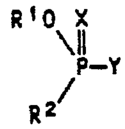

(III)

where Y is halogen, in the presence or absence of a solvent or diluent at from 0 to 120°C.

3. A pesticide containing a phosphoric acid derivative as claimed in claim 1.

4. A pesticide containing a solid or liquid carrier and one or more phosphoric acid derivatives of the formula I as claimed in claim 1.

5. Use of a phosphoric acid derivative of the formula I as claimed in claim 1 for controlling pests.

6. A method for controlling pests, wherein an effective amount of a phosphoric acid derivative as claimed in claim 1 is allowed to act on pests or their habitat.